# EUROPEAN PATENT APPLICATION

(11) **EP 4 060 978 A1**
(43) Date of publication of application: **21.09.2022**
(21) Application number: 22155585.7
(22) Date of filing: 08.02.2022
(51) Int. Cl.: H04N 5/225, H04N 5/232, H04N 5/33, H04N 5/235, H04N 9/04, H04N 5/247, G06V 10/145, G06V 20/59, G06V 40/16, G02F 1/19

(54) **IMPROVED CABIN MONITORING WITH ELECTRICALLY SWITCHED POLARIZATION**

(30) Priority: 11.02.2021 AU 2021900340; 10.03.2021 AU 2021900680
(71) Applicant: Seeing Machines Limited, Fyshwick, ACT 2609 (AU)
(72) Inventor: NOBLE, John, Fyshwick, 2609 (AU)
(74) Representative: Vossius & Partner Patentanwälte Rechtsanwälte mbB

(57) **Abstract**

Described herein is an imaging system (200) for imaging a scene. The system (200) includes a camera (106) having an image sensor for capturing images of the scene in both the visible and infrared wavelength ranges and at least one light source (108) configured to emit a beam of light to selectively illuminate the scene with infrared radiation during image capture by the camera (106). The system (200) also includes an electrically controllable filter (203) being configured to pass infrared wavelengths to the image sensor and selectively pass or filter visible light received at the image sensor based on a control signal.

## Description

### FIELD OF THE INVENTION

The present application relates to imaging systems and in particular to imaging systems in which a scene can be imaged in both of the visible and infrared wavelength range.

Embodiments of the present invention are particularly adapted for subject monitoring systems such as systems for tracking an eye or eyes of a vehicle driver. However, it will be appreciated that the invention is applicable in broader contexts and other applications.

### BACKGROUND

Conventional camera imaging systems image a scene and/or subject in the visible wavelength range to capture colour information. These systems traditionally do not need to image in other wavelength ranges. As such, traditional image sensors are primarily only sensitive in the visible range and include red, green and blue wavelength sensitive pixels (e.g. in a well-known Bayer filter pattern).

Separately, subject monitoring systems like eye trackers typically image a scene and subject in the infrared wavelength range. Imaging in this wavelength range provides improved sensitivity in dark conditions and is less distracting to the subject being monitored. The sun emits light across a wide range of wavelengths, including both the visible and infrared ranges. Sunny conditions can provide unwanted noise in driver monitoring systems such as strong reflections from eyewear worn by the subject being imaged. As a result, it is typically advantageous to filter sunlight from driver monitoring systems to reduce system noise. This includes filtering visible wavelengths from reaching the image sensor.

As such, conventional imaging cameras and driver monitoring cameras are typically designed to operate exclusively in their respective wavelength ranges and one type of camera cannot efficiently perform the task of the other. The inventor has identified that, in future cabin monitoring systems, it may be advantageous for a single system to operate as both a conventional imaging system and a subject monitoring system.

Within the field of subject monitoring systems, eye tracking systems rely on detection of eye features in camera images such as iris and pupil contours and eyelids to accurately track eye gaze and drowsiness (e.g. eye closure) of a subject. To accurately detect these features, there must exist a suitable signal to noise ratio to identify the contours of the eye features.

Eye tracking systems may be quite robust under normal operating conditions. However, the systems often break down when the subject's eyes become partially occluded, such as when the subject is wearing dark sunglasses or other glasses in the presence of high glare.

Techniques exist for improving the robustness of eye tracking systems when the subject is wearing reflective sunglasses, which produces glare effects. Typical glare reduction techniques involve strobing different light sources and performing post processing of the images to reduce glare such as reflections from glasses. Stereo camera systems may also mitigate the effect of glare from glasses by switching between different cameras. However, these known glare reduction techniques require either at least two light sources or two cameras, which adds to system size and cost. System size is a particularly important factor in driver monitoring systems where space on a modern vehicle dashboard is highly valuable.

PCT Patent Application Publication WO 2019/119025 entitled "High performance imaging system using a dielectric metasurface" by John Noble and assigned to Seeing Machines Limited discloses a technique for reducing the effects of reflections from glasses by polarizing a light used to illuminate the subject via dielectric metasurface. However, this techniques may not work when the subject is wearing polarized sunglasses as the polarized light transmitted to the subject will be filtered by the sunglasses.

US Patent Application Publication 2015/0242680 entitled "Polarized Gaze Tracking" relates to reducing glare effects from eyewear in an eye gaze tracker by dynamically polarizing the light upon detection of eyewear. The technique described in the '680 document requires the use of two separately positioned light sources, which adds to the size and cost of the overall system. Such a configuration is prohibitive in automotive applications such as driver monitoring systems where the size and cost of a monitoring system is very important.

Any discussion of the background art throughout the specification should in no way be considered as an admission that such art is widely known or forms part of common general knowledge in the field.

### SUMMARY OF THE INVENTION

In accordance with a first aspect of the present invention, there is provided an imaging system for imaging a scene, the system including:
a camera having an image sensor for capturing images of the scene in both the visible and infrared wavelength ranges;
at least one light source configured to emit a beam of light to selectively illuminate the scene with infrared radiation during image capture by the camera; and
an electrically controllable filter being configured to pass infrared wavelengths to the image sensor and selectively pass or filter visible light received at the image sensor based on a control signal.

In some embodiments, the electrically controllable filter includes an active domain liquid crystal shutter. In other embodiments, the electrically controllable filter includes a polarizing filter to selectively control the polarization of the beam of light.

In some embodiments, the polarizing filter includes a liquid crystal cell, a first linear polarizer disposed on an input side of the liquid crystal cell and a second linear polarizer disposed on an output side of the liquid crystal cell, wherein the first and second linear polarizers have orthogonal polarization axes.

In some embodiments, the polarizing filter selectively polarizes visible light while allowing the infrared light to pass.

In some embodiments, the system includes an infrared polarizing device that selectively polarizes infrared light while allowing visible light to pass.

In some embodiments, the control signal is based at least in part on an operational mode of the system. In some embodiments, the control signal is based at least in part on a preference for output colour images or infrared images. In some embodiments, the control signal is based at least in part on an assessment by an image processor of whether or not one or more subjects identified in the captured images are wearing eyewear.

In some embodiments, the system is a subject imaging system configured to image one or more subjects in the scene. In some embodiments, the system is an occupant monitoring system for imaging a driver or passenger of a vehicle.

In accordance with a second aspect of the present invention, there is provided an image sensor comprising:
a sensor array having a first plurality of pixels configured to sense the visible range of wavelengths and a second plurality of pixels configured to sense only infrared wavelengths; and
an electrically controllable filter attached to or integral with the sensor array and configured to pass infrared wavelengths to the sensor array and selectively pass or filter visible wavelengths received at the sensor array based on a control signal.

In some embodiments, the electrically controllable filter includes a includes an active domain liquid crystal shutter. In other embodiments, the electrically controllable filter includes a polarizing filter to selectively control the polarization of the beam of light.

In some embodiments, the polarizing filter includes a liquid crystal cell, a first linear polarizer disposed on an input side of the liquid crystal cell and a second linear polarizer disposed on an output side of the liquid crystal cell, wherein the first and second linear polarizers have orthogonal polarization axes.

In some embodiments, the image sensor includes an imaging lens and wherein the electrically controllable filter is located between the imaging lens and the sensor array.

In some embodiments, the image sensor is configured to be incorporated into a subject monitoring system for monitoring one or more subjects in a scene. The subject monitoring system may be a vehicle occupant monitoring system configured to image a driver and/or passengers of a vehicle.

In accordance with a third aspect of the present invention, there is provided an eye tracking system for tracking one or more eyes of a subject, the system including:
at least one camera having a respective image sensor for capturing images of the subject, including the subject's eye or eyes;
at least one light source configured to emit a beam of light to selectively illuminate the subject's eye or eyes during image capture by the one or more cameras;
a processor configured to process at least a subset of the captured images to determine a presence or absence of eyes and to determine one or more eye characteristics of the subject;
a controller configured to generate a control signal in response to the determination of a presence or absence of eyes by the processor; and
a polarizing system configured to selectively polarize the beam of light based on the control signal and to filter light received at the camera for incidence onto the image sensor.

In some embodiments, the processor is configured to determine a state of eyewear worn by the subject. The controller is preferably configured to generate the control signal in response to the determination of a state of eyewear by the processor.

In some embodiments, the polarizing system includes an electronic polarizer element configured to switch between different polarizing states in response to the control signal. In some embodiments, the electronic polarizer element includes a liquid crystal element responsive to the control signal.

In some embodiments, the polarizing system includes a polarizing filter positioned to selectively filter light incident onto the image sensor. The polarizing filter preferably allows light in a first polarization state to pass and partially or completely filters light in other polarization states.

In some embodiments, the electronic polarizer element and polarizing filter form a single element.

In some embodiments, the state of eyewear includes a determination of the presence of polarized eyewear worn by the subject. The state of eyewear may include a determination of the presence of non-polarized eyewear worn by the subject. The state of eyewear may include a determination of no eyewear worn by the subject.

In some embodiments, upon detection of a no eyewear state or polarized eyewear state by the processor, the controller is configured to actuate the polarizer element into a random polarized or unpolarized state.

In some embodiments, the polarizing filter is electrically controllable by the controller. Upon detection of a no eyewear state or polarized eyewear state by the processor, the polarizing filter may be actuatable to allow all polarization states to pass.

In some embodiments, upon detection of a non-polarized eyewear state by the processor, the controller is configured to actuate the polarizer element into a linear or circular polarized state. In some embodiments, upon detection of a polarized eyewear by the processor, the controller is configured to actuate the polarizer element into a vertical linear polarized state.

In some embodiments, the system includes a single light source.

In some embodiments, the polarizing system is configured to switch between a first state in which both visible and infrared light is transmitted and a second state in which visible light is partially or fully filtered.

In accordance with a fourth aspect of the present invention, there is provided an imaging system for imaging a subject, the imaging system including:
a light source for generating an input light beam and projecting the input light beam along a path towards the scene;
a polarizer positioned within the path of the input light beam, the polarizer being configured to circularly polarize the input light beam to generate an output light beam having a circular polarization state for illuminating the subject;
a polarizing filter configured to receive light returned from the subject and to direct the returned light having the circular polarization state to an image sensor and to reject light having all other polarization states; and
an image sensor configured to image the reflected light to obtain images of the subject;
wherein the polarizer is selectively actuatable between a polarizing state and a non-polarizing state based on a control signal received from a controller; and wherein the controller is responsive to the detection of polarized or non-polarized eyewear worn by the subject to generate the control signal.

In accordance with a fifth aspect of the present invention, there is provided an eye tracking method for tracking one or more eyes of a subject, the method including:
receiving digital images of a subject captured by a digital image sensor, the digital images including the subject's eye or eyes;
selectively illuminating the subject's eye or eyes with a beam of light during image capture by the one or more cameras;
processing at least a subset of the captured digital images to determine a presence or absence of eyes and to determine one or more eye characteristics of the subject;
generating a control signal in response to the determination of a presence or absence of eyes by the processor; and
controlling a polarizing element to selectively polarize the beam of light based on the control signal and to filter light received at the camera for incidence onto the image sensor.

In some embodiments, the images are processed to determine a state of eyewear worn by the subject. The control signal is preferably generated in response to the determination of a state of eyewear by the processor.

In accordance with a sixth aspect of the present invention, there is provided a subject imaging system for tracking one or more eyes of a subject, the system including:
at least one camera having a respective image sensor for capturing images of the subject in both the visible and infrared wavelength range, the images including the subject's eye or eyes;
at least one light source configured to emit a beam of light to selectively illuminate the subject's eye or eyes with at least infrared radiation during image capture by the one or more cameras;
a polarizing system configured to selectively polarize the beam of light and to filter light received at the camera for incidence onto the image sensor;
wherein the polarizing system selectively polarizes infrared wavelengths based on detection or absence of pupils or eyewear of the subject in the captured images; and
wherein the polarizing system selectively passes or blocks visible wavelengths from being received at the camera.

In some embodiments, the polarizing system includes a visible light polarizing device that selectively polarizes visible light while allowing the infrared light to pass. In one embodiment, the visible light polarizing device includes a liquid crystal cell disposed between two linear polarizers having orthogonal polarization axes.

In some embodiments, the polarizing system includes an infrared polarizing device that selectively polarizes infrared light while allowing visible light to pass.

### BRIEF DESCRIPTION OF THE FIGURES

Example embodiments of the disclosure will now be described, by way of example only, with reference to the accompanying drawings in which:
Figure 1 is a perspective view of the interior of a vehicle having a driver monitoring system including a camera and two LED light sources installed therein;
Figure 2 is a driver's perspective view of an automobile dashboard having the driver monitoring system of Figure 1 installed therein;
Figure 3 is a schematic functional view of a driver monitoring system according to Figures 1 and 2;
Figure 4 is a schematic view of a section of an RGB-IR image sensor showing an example layout of sensor pixels;
Figure 5 is a graph of quantum efficiency versus wavelength for blue, green, red and infrared pixels of an RGB-IR image sensor;
Figure 6 is a plan view of the driver monitoring system of Figures 1 to 3 including visible light shutter capability showing a camera field of view and an LED illumination field on a subject;
Figure 7A is a schematic perspective view of a twisted nematic type liquid crystal polarizer when no voltage is applied across electrodes of a liquid crystal cell to produce linearly polarized light;
Figure 7B is a schematic perspective view of the liquid crystal polarizer of Figure 12A when a voltage is applied across electrodes of a liquid crystal cell to block the passage of light;
Figure 8 is a schematic illustration showing an optical train for visible light passing through an imaging system to perform visible light shuttering and the corresponding polarization states at each stage;
Figure 9 is a graph of transmittance versus wavelength for instances when a polarization-based visible light shutter is switched off, partially on and fully on;
Figure 10 is a schematic side view of an image sensor having an integrated visible light shutter;
Figure 11 is a plan view of the driver monitoring system of Figures 1 to 3 including reflection mitigation capability showing a camera field of view and an LED illumination field on a subject;
Figure 12 is a process flow chart illustrating the primary steps in an eye tracking method using the driver monitoring system of Figure 11;
Figure 13A is a schematic illustration showing an optical train for infrared light passing through an imaging system to perform infrared subject monitoring and the corresponding polarization states at each stage, wherein a polarizing system is configured to filter specular reflections;
Figure 13B is a schematic illustration showing an optical train for infrared light passing through an imaging system to perform infrared subject monitoring and the corresponding polarization states at each stage, wherein a polarizing system is configured to pass light from specular and regular reflections;
Figure 14 is a before and after front view of a driver's face illustrating the removal of glare;
Figure 15 is a process flow diagram illustrating processing steps in a method of controlling a polarizing system to perform driver monitoring in a scenario where the polarizing system is initially controlled into an active polarizing state;
Figure 16 is a process flow diagram illustrating processing steps in a method of controlling a polarizing system to perform driver monitoring in a scenario where the polarizing system is initially in an inactive polarizing state;
Figure 17 is a process flow diagram illustrating processing steps in a simplified method of controlling a polarizing system to perform driver monitoring which does not actively detect a state of eyewear; and
Figure 18 is a schematic illustration showing an optical train for operating an imaging system as both a visible light shutter and infrared subject monitoring system.

### DESCRIPTION OF THE INVENTION

The imaging and subject monitoring systems described herein may be applied and used in a multitude of environments. One example is monitoring a driver and/or passengers of an automobile or for example, other vehicles such as a bus, train or airplane. Additionally, the described system may be applied to an operator using or operating any other equipment, such as machinery and flight simulators. The invention may also be applicable to other fields of use and in other contexts in which the scene being imaged is not a driver of a vehicle. By way of example, embodiments of the invention have applications in illumination and imaging systems for mobile devices (mobile phones, tablet computers, PDAs laptops etc.), webcams and LIDAR systems. For ease of understanding, the embodiments of the invention are described herein within the context of a driver monitoring system for a vehicle. Furthermore, although the illumination devices are described as being light emitting diodes (LEDs), it will be appreciated that the invention is applicable to other types of infrared light sources such as vertical-cavity surface-emitting lasers (VCSELs).

### System overview

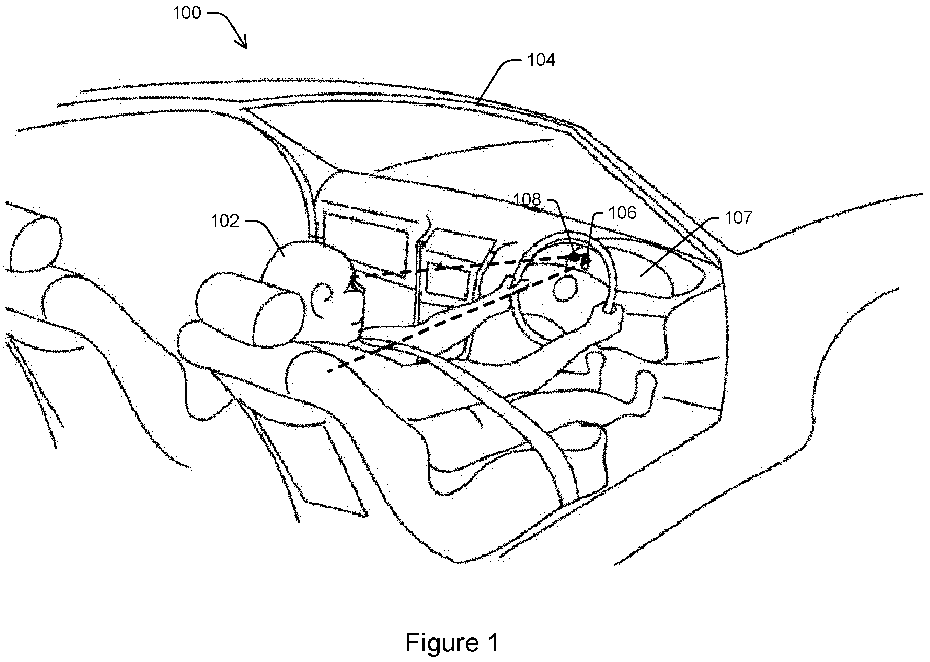

Referring initially to Figures 1 to 3, there is illustrated a driver monitoring system 100 for capturing images of a vehicle driver 102 during operation of a vehicle 104. System 100 is further adapted for performing various image processing algorithms on the captured images such as facial detection, facial feature detection, facial recognition, facial feature recognition, facial tracking or facial feature tracking, such as tracking a person's head and eyes. Example image processing routines for performing head and eye tracking are described in US Patent 7,043,056 to Edwards et al. entitled "*Facial Image Processing System*" and assigned to Seeing Machines Pty Ltd, the contents of which are incorporated herein by way of cross-reference.

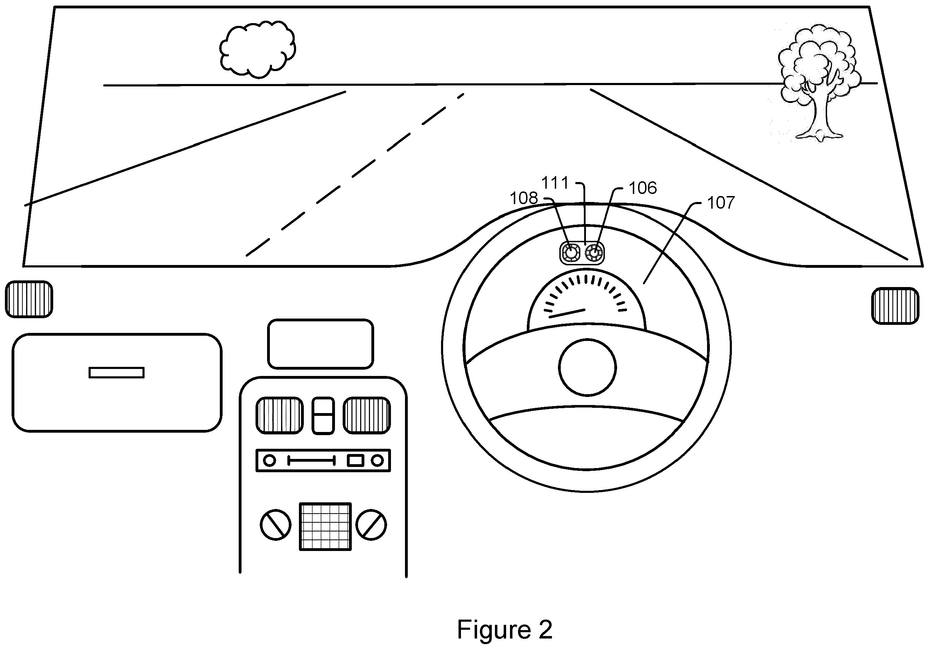

As best illustrated in Figure 2, system 100 includes an imaging camera 106 that is positioned on or in the vehicle dash 107 instrument display and oriented to capture images of the driver's face in the infrared wavelength range to identify, locate and track one or more human facial features.

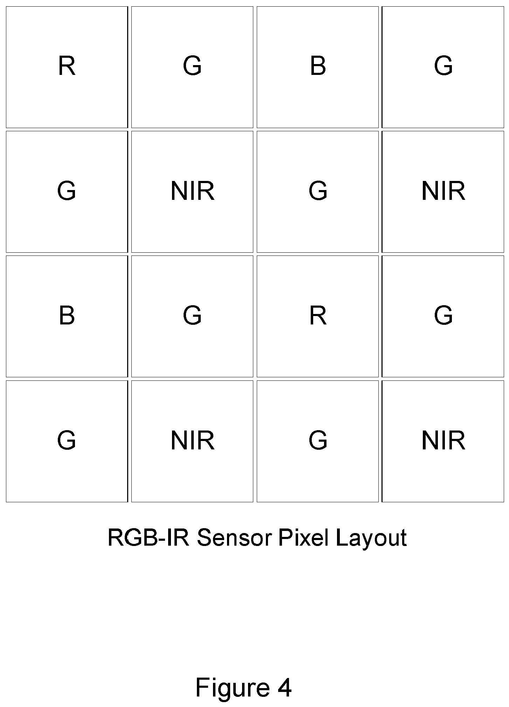

Camera 106 may include a conventional CCD or CMOS based digital camera having a two dimensional array of photosensitive pixels and optionally the capability to determine range or depth (such as through one or more phase detect elements). For the visible light shutter embodiments illustrated below, the photosensitive pixels are collectively capable of sensing electromagnetic radiation in both the infrared range and also the visible range. In some embodiments, camera 106 incorporates a RGB-IR sensor that is capable of imaging in both the visible and infrared wavelength range. An example RGB-IR sensor layout is illustrated in Figure 4.

RGB-IR image sensors have pixels that are modified from the standard Bayer format to include one or more visible range sensing elements and one or more infrared sensing elements. In the illustrated design of Figure 4, the blue and red sensor elements are reduced to introduce near infrared (NIR) sensing elements. However, other arrangements of sensor elements are possible in RGB-IR image sensors. As will be described below, camera 106 may also include one or more polarizing elements for performing selective polarization and filtering of incident light.

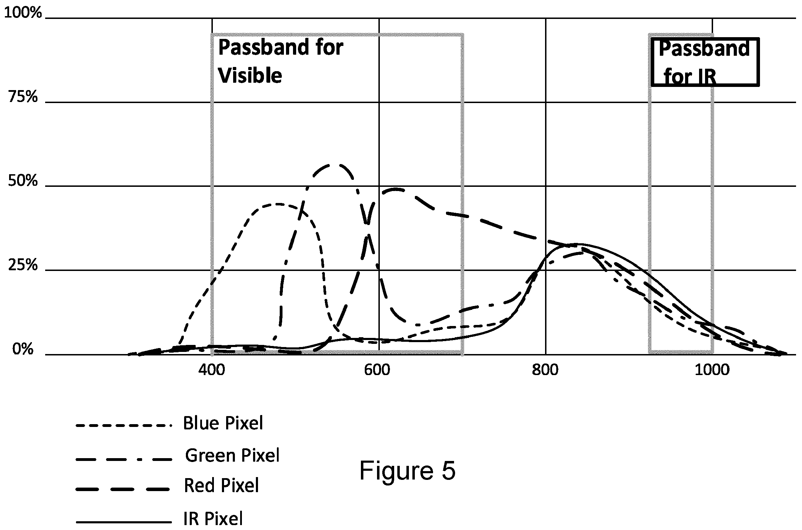

Figure 5 illustrates the pixel sensitivity versus light wavelength for an RGB-IR image sensor. As illustrated, each of the red, green and blue sensitive pixels have peak sensitivities in the visible wavelength range while the infrared sensitive pixels have close to zero sensitivity in the visible range. However, each of the red, green, blue and infrared sensitive pixels have approximately the same sensitivity in the infrared wavelength range. As such, the visible light sensitive pixels are also sensitive to the infrared wavelength range.

In some embodiments, camera 106 may also be a three dimensional camera such as a time-of-flight camera, LIDAR or other scanning or range-based camera capable of imaging a scene in three dimensions provided it is capable of imaging in both the visible and infrared wavelength ranges. In other embodiments, camera 106 may be replaced by a pair of like cameras operating in a stereo configuration and calibrated to extract depth.

Referring again to Figure 2, system 100 also includes an infrared light source 108, which may take the form of one or more LEDs, VCSELs or other types of illumination device. Light source 108 is disposed adjacent camera 106 to generate an input light beam and project the light beam along a path towards driver 102. Light source 108 is controlled to selectively illuminate the driver's face with infrared radiation during image capture by camera 106 in a manner described below.

In some embodiments, light source 108 may comprise more than one individual illumination device that may be disposed at separate horizontally or vertically displaced positions proximate to the camera on vehicle dash 107.

Light source 108 is adapted to illuminate driver 102 with infrared radiation during predefined image capture periods when camera 106 is capturing an image, so as to enhance the driver's face to obtain high quality images of the driver's face or facial features. Operation of camera 106 and light source 108 in the infrared range reduces visual distraction to the driver. Operation of camera 106 and light source 108 is controlled by an associated system controller 112 (described below) which comprises a computer processor or microprocessor and memory for storing and buffering the captured images from camera 106.

In some embodiments, light source 108 includes two spaced apart illumination devices that are alternatively activated or "strobed" to provide for illumination at different angles which allows for reduction of glare effects as described in PCT Patent Application Publication WO 2016/131075 entitled "*Glare Reduction*" and assigned to Seeing Machines Limited. However, as will be described below, the present invention is able to reduce glare present in images without the need for two or more separate light sources.

As best illustrated in Figure 2, camera 106 and light source 108 may be manufactured or built as a single unit 111 having a common housing. The unit 111 is shown installed in a vehicle dash 107 and may be fitted during manufacture of the vehicle or installed subsequently as an after-market product. In other embodiments, the driver monitoring system 100 may include one or more cameras and light sources mounted in any location suitable to capture images of the head or facial features of a driver, subject and/or passenger in a vehicle. By way of example, cameras and light sources may be located on a steering column, rearview mirror, center console or driver's side A-pillar of the vehicle.

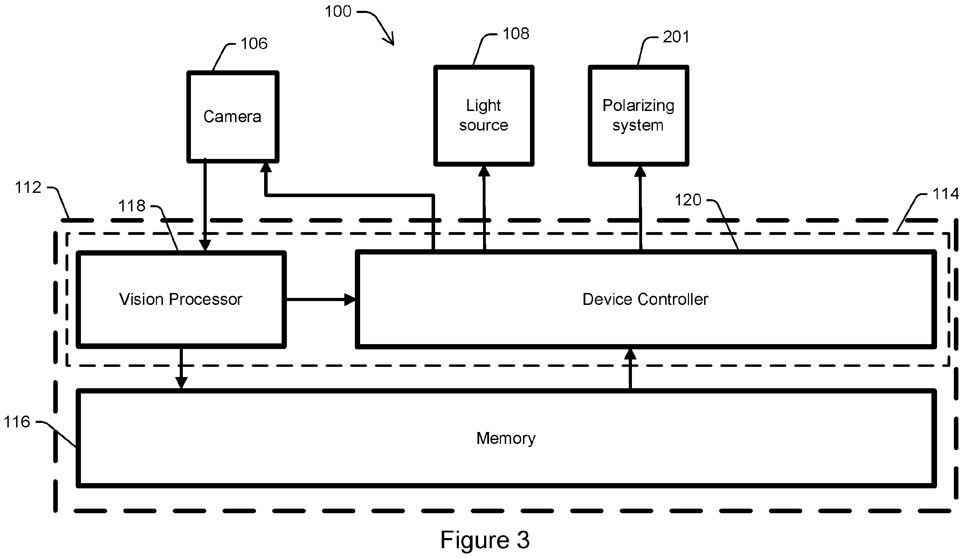

Turning now to Figure 3, the functional components of system 100 are illustrated schematically. A system controller 112 acts as the central processor for system 100 and is configured to perform a number of functions as described below. Controller 112 is located within the dash 107 of vehicle 104 and may be connected to or integral with the vehicle on-board computer. In another embodiment, controller 112 may be located within a housing or module together with camera 106 and light source 108. The housing or module is able to be sold as an after-market product, mounted to a vehicle dash and subsequently calibrated for use in that vehicle. In further embodiments, such as flight simulators, controller 112 may be an external computer or unit such as a personal computer.

Controller 112 may be implemented as any form of computer processing device or portion of a device that processes electronic data, e.g., from registers and/or memory to transform that electronic data into other electronic data that, e.g., may be stored in registers and/or memory. As illustrated in Figure 3, controller 112 includes a microprocessor 114, executing code stored in memory 116, such as random access memory (RAM), read-only memory (ROM), electrically erasable programmable read-only memory (EEPROM), and other equivalent memory or storage systems as should be readily apparent to those skilled in the art.

Microprocessor 114 of controller 112 includes a vision processor 118 and a device controller 120. Vision processor 118 and device controller 120 represent functional elements which are both performed by microprocessor 114. However, it will be appreciated that, in alternative embodiments, vision processor 118 and device controller 120 may be realized as separate hardware such as microprocessors in conjunction with custom or specialized circuitry.

Vision processor 118 is configured to process the captured images to perform the driver monitoring; for example to determine a three dimensional head pose and/or eye gaze position of the driver 102 within the monitoring environment and/or a degree, duration and frequency of eye closure. To achieve this, vision processor 118 utilizes one or more eye gaze determination algorithms. This may include, by way of example, the methodology described in Edwards *et al.* referenced above. Vision processor 118 may also perform various other functions including determining attributes of the driver 102 such as eye closure, blink rate and tracking the driver's head motion to detect driver attention, sleepiness or other issues that may interfere with the driver safely operating the vehicle.

Vision processor 118 may also be configured to determine a state of eyewear worn by driver 102, as described below.

The raw image data, gaze position data and other data obtained by vision processor 118 is stored in memory 116.

Device controller 120 is configured to control camera 106 and to selectively actuate light source 108 in a video sequence. Light source 108 is activated and deactivated in synchronization with consecutive image frames captured by camera 106 to illuminate the driver during image capture. Camera 106 includes an image sensor that is configured to image reflected light being light from the output light beam that is reflected from the driver's face and the surrounding scene. Working in conjunction, device controller 120 and vision processor 118 provide for capturing and processing images of the driver to obtain driver state information such as drowsiness, attention and gaze position during an ordinary operation of vehicle 104. Additional components of the system may also be included within the common housing of unit 111 or may be provided as separate components according to other additional embodiments. In one embodiment, the operation of controller 112 is performed by an onboard vehicle computer system which is connected to camera 106 and light source 108.

System 100 also includes a polarizing system 201 for performing polarization manipulation of the light received at camera 106. Various embodiments employing different polarizing systems will be described below. Device controller 120 is also configured to selectively control one or more polarizing elements of this polarizing system 201.

### Visible light shutter

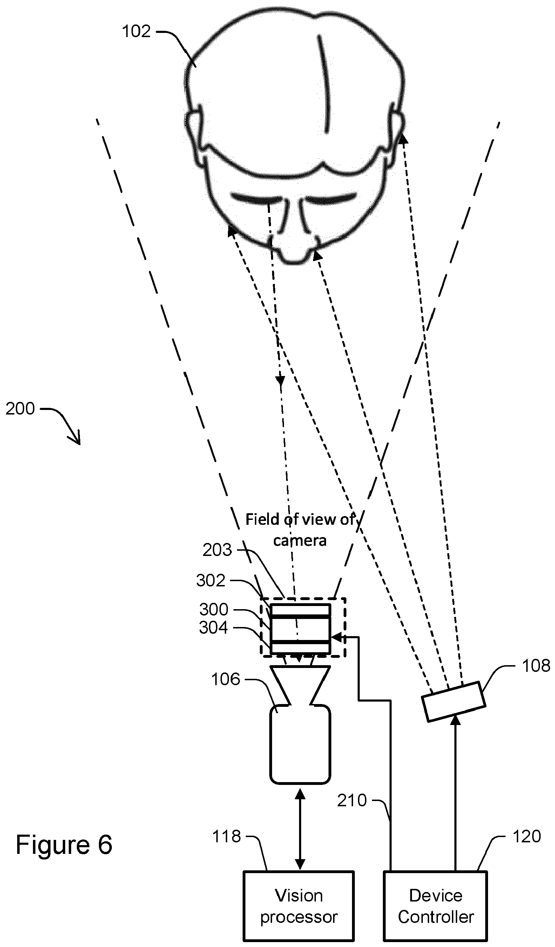

Referring now to Figure 6, system 100 can be used to operate as a visible light shutter system 200 to switch between operation in the visible region for normal video capture and in the infrared region for subject monitoring applications. In embodiments directed to this application, camera 106 incorporates an RGB-IR image sensor such as that illustrated in Figure 4. This allows the image sensor of camera 106 to image the subject 102 in either or both a visible wavelength range and an infrared wavelength range.

As illustrated, in system 200, the polarizing system includes an electrically controllable filter 203 being configured to pass infrared wavelengths to the image sensor of camera 106 and selectively pass or filter visible light received at the image sensor of camera 106 based on a control signal 210. The control signal is preferably provided by device controller 120 as illustrated in Figure 6. This dynamic control allows filter 203 to operate as a visible light shutter such that activation of the filter 203 into a first state by device controller 120 blocks the visible wavelengths but not the infrared wavelengths. In a second state, filter 203 passes both the visible and infrared wavelengths to the image sensor of camera 106.

This control can be useful for switching the system between a subject monitoring system (where infrared light is preferable and visible light is noise) and a conventional imaging system such as a video camera for video conferences (where visible light is preferable to capture colour). In some embodiments, in a subject monitoring mode, filter 203 is simply deactivated so that filter 203 acts as a visible light filter and the visible light is blocked while the infrared light is passed.

In some embodiments, filter 203 includes an active domain liquid crystal shutter. This type of device does not include polarizers but includes a liquid crystal cell that is divided into different domains of liquid crystals. The different domains may be independently electrically controllable to change the direction of orientation of the liquid crystals in the domains to be in phase or out of phase. This dynamic phase control can be used to provide constructive or destructive interference in the different domains to selectively pass or block light. The liquid crystal material is configured to be invisible to infrared light such that the shutter effect only occurs on the visible light passing through filter 203.

In other embodiments, filter 203 operates based on polarization and includes a liquid crystal shutter comprising a liquid crystal cell 300 and a pair of linear polarizers 302 and 304 disposed on either side of cell 300 and oriented such that they have orthogonal polarization axes. The polarization axis of linear polarizers 302 and 304 is the axis that allows light of that polarization to pass. By way of example, a vertical polarization axis allows vertically polarized light to pass while filtering horizontally polarized light. Liquid crystal cell 300 has a polarizing effect on visible wavelengths while being effectively invisible to wavelengths in the infrared wavelength range. Various liquid crystal devices are commercially available that meet this requirement.

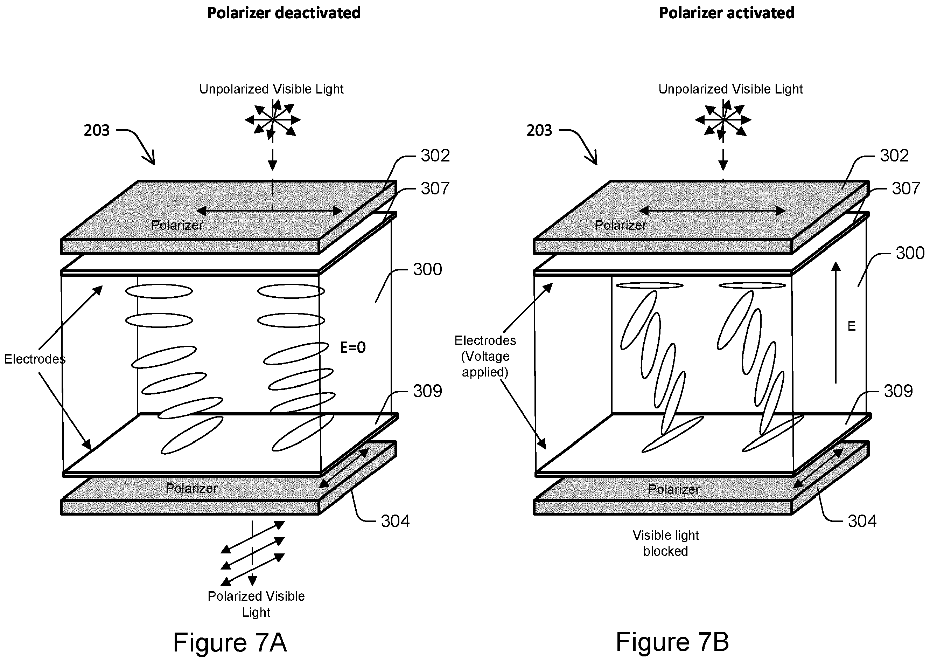

The selective passing of visible light is illustrated schematically in Figures 7A and 7B, which illustrates polarizing filter 203 incorporating a twisted nematic liquid crystal cell 300. Cell 300 is surrounded by electrodes 307 and 309 which are connected to a voltage source to selectively apply an electric field across cell 300 in response to control signal 210. Control signal 210 may be provided by user input from an input device or interface or may be provided automatically such as from an output of vision processor 118. Control signal 210 may be based at least in part on an operational mode of the system. Control signal 210 may be based at least in part on a preference for output colour images or infrared images. Control signal 210 may also be based at least in part on an assessment by an image processor of whether or not one or more subjects identified in the captured images are wearing eyewear.

Although not shown, the liquid crystal cell 300 includes a first alignment layer adjacent upper electrode 307 which aligns the orientation of the liquid crystals in a default state along the direction of the polarizing axis of the first linear polarizer 302. A second alignment layer adjacent lower electrode 309 aligns the orientation of the liquid crystals in a default state along the direction of the polarizing axis of the first linear polarizer 304 (perpendicular to that of linear polarizer 302).

In Figure 7A, filter 203 is deactivated by switching off the voltage applied to liquid crystal cell 300. Under this condition, no electric field is applied and the nematic liquid crystal molecules undergo a 90 degree twist within cell 300 due to the alignment of liquid crystals from the perpendicular alignment layers. Unpolarized or randomly polarized visible light enters linear polarizer 302 and emerges polarized in the same plane as the local orientation of the liquid crystal molecules (defined by the upper alignment layer of cell 300). The twisted arrangement of the liquid crystal molecules within cell 300 then rotates the plane of polarization by a quarter turn (90 degrees) so that the light which reaches the second polarizer 304 can pass through it. In this configuration, filter 203 is operating in the visible imaging mode to pass both visible and infrared wavelengths.

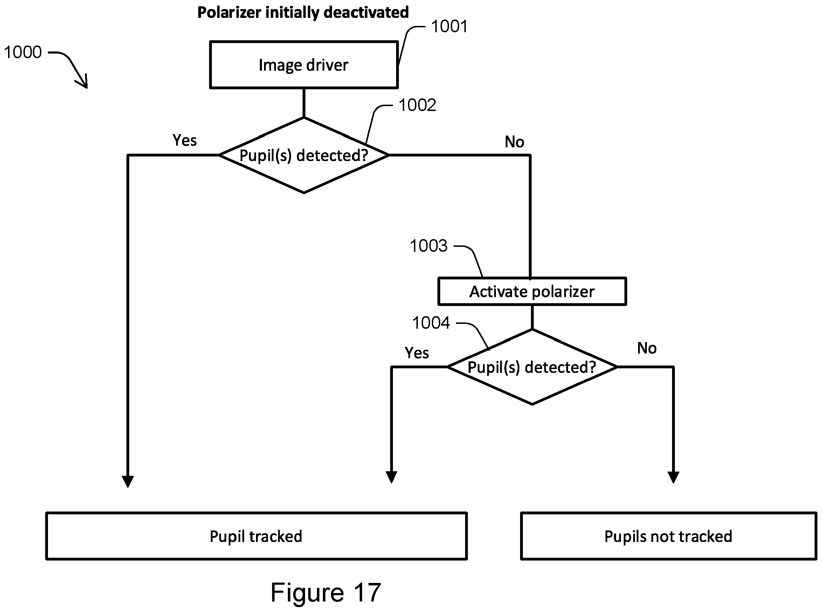

In Figure 17B, filter 203 is activated into an active state by applying a voltage across electrodes 307 and 309 of cell 300 to establish an electric field. Under this condition, the liquid crystal molecules generally align with the resulting electric field (in this case vertically upward) and cell 300 does not polarize the incident visible light in line with second polarizer 304. As such, polarizer 304 blocks most of the light and filter 203 acts as a visible light filter. At the same time, filter 203 is effectively invisible to the longer infrared wavelengths and these wavelengths are passed through filter 203 regardless of the applied voltage. In this configuration, filter 203 is operating in a subject monitoring mode to pass only infrared wavelengths to the image sensor. When the electric field is turned off, the molecules relax back to their twisted state and the cell again allows passage of visible light.

In this manner, filter 203 can be used as a visible light shutter to selectively block or transmit visible returned from driver 102 or other subject/object.

It will be appreciated that the design of filter 203 illustrated in Figures 7A and 7B is exemplary only and other configurations and types of liquid crystal polarizer are possible. Furthermore, in some embodiments, filter 203 may incorporate a Faraday rotator, Kerr cell or a Pockels cell in place of liquid crystal cell 300, which use magnetic or electric fields to control the birefringence of a material and modify its polarization proportionately.

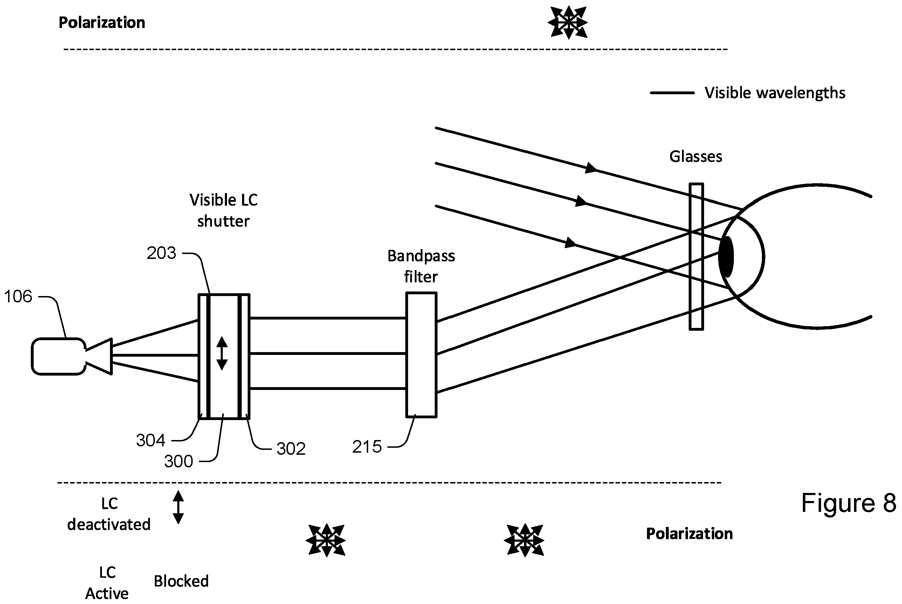

Referring now to Figure 8, there is illustrated schematically the operation of system 200 as a visible light shutter to selectively block or pass visible light. Here, infrared light is not illustrated for the purpose of clarity. Visible light is incident onto the eye of subject 102 from the scene and surroundings. Some of this visible light is reflected along an optical path to be imaged by camera 106, which includes an RGB-IR image sensor as described above. Before reaching camera 106, the reflected visible light is passed through polarizing filter 203, incorporating a liquid crystal polarizer like that shown in Figure 7. Polarizing filter 203 is selectively activated into an active state to block the visible light or an inactive state to pass the visible light in a linearly polarized state. A bandpass filter 215 having a dual passband covering the RGB and IR ranges of wavelengths may optionally be placed before polarization filter 203 to filter out light from other wavelength ranges which may interfere with the imaging.

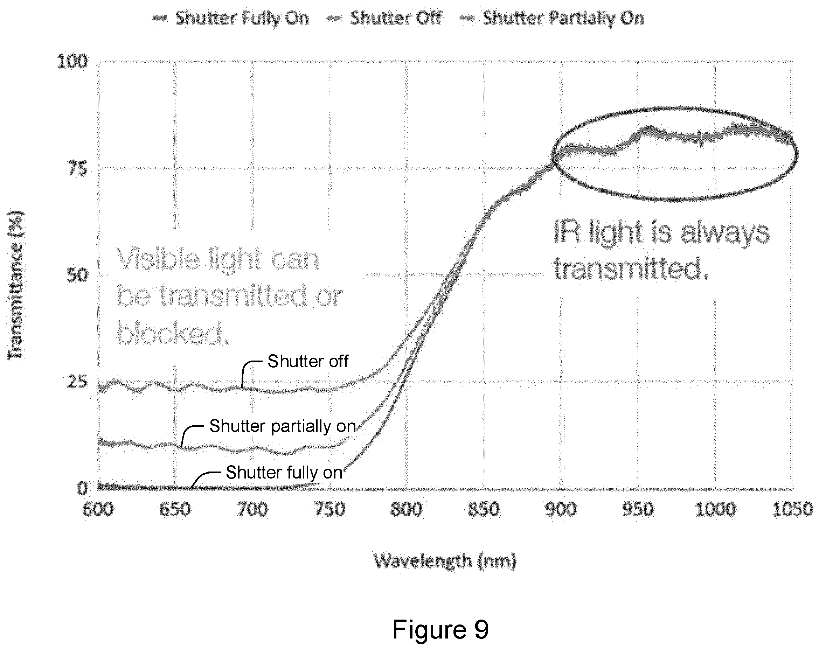

Figure 9 illustrates the transmittance of light across the visible and infrared wavelength ranges when the filter 203 is fully on (full electric field across the liquid crystal cell 300), partially on and switched off. As illustrated, the transmittance of visible light is dependent on the voltage applied across the liquid crystal cell 300 while the infrared light is always transmitted.

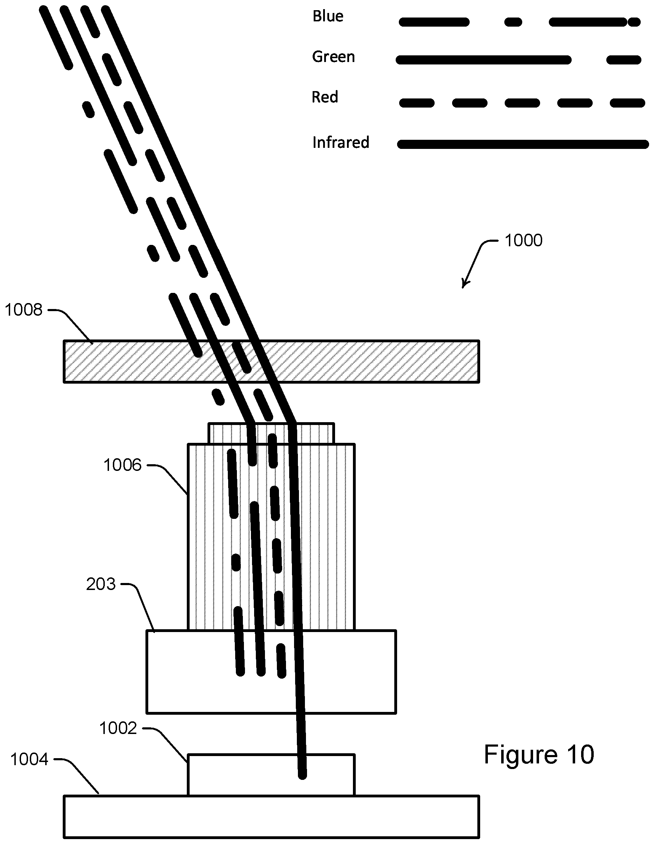

Referring now to Figure 10, there is illustrated an image sensor 1000 having a filter 203 integrated therein to define an integrated image sensor with visible light shutter device. The image sensor includes a sensor array 1002 having a first plurality of pixels configured to sense the visible range of wavelengths and a second plurality of pixels configured to sense only infrared wavelengths. By way of example, sensor array 1002 may comprise a RGB-IR sensor array as described above and illustrated in Figure 4. Sensor array 1002 is mounted on a substrate 1004 such as a silicon substrate.

Electrically controllable filter 203 is attached to or integral with the sensor array 1002 and configured to pass infrared wavelengths to sensor array 1002 and selectively pass or filter visible wavelengths received at sensor array 1002 based on a control signal. In some embodiments, sensor array 1002 and polarizing filter 203 form a monolithic structure. Filter 203 may include a polarizing filter such as that described above or an active domain liquid crystal light shutter device.

Image sensor 1000 also includes an imaging lens 1006 and filter 203 is preferably located between imaging lens 1006 and sensor array 1002. Finally, image sensor 1000 includes a protective cover glass layer 1008. In other embodiments, filter 203 is located between imaging lens 1006 and cover glass layer 1008.

Image sensor 1000 may be incorporated into a subject monitoring system for monitoring one or more subjects in a scene such as a vehicle occupant monitoring system configured to image a driver and/or passengers of a vehicle.

In further embodiments, additional polarizing elements can be added to system 200 to selectively polarize visible light while allowing the infrared light to pass and/or selectively polarize infrared light while allowing visible light to pass.

### Polarization control for eyewear effect mitigation

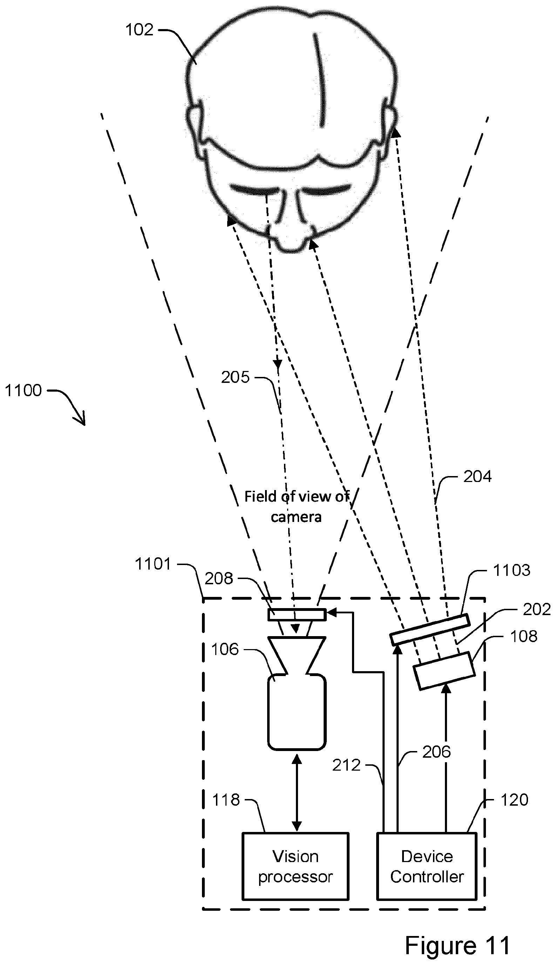

Referring now to Figure 11, there is illustrated a plan view of a system 1100 for tracking one or more eyes of one or more subjects. System 1100 includes an imaging system 1101 including a polarizing system for selectively polarizing an input light beam 202. The polarizing system includes a polarizing element in the form of polarizer 1103 disposed adjacent light source 108 and positioned within the path of input light beam 202 generated by light source 108. By way of example, polarizer 1103 may be formed of or include a liquid crystal cell in combination with a quarter wave plate. The quarter wave plate may be mounted to or adhered to a side of the liquid crystal cell. The polarizer 1103 may also include one or more linear polarizers such that an applied voltage to the liquid crystal cell selectively rotates the polarizing axis of light transmitted from the liquid crystal cell in a similar manner that described above.

Polarizer 1103 is electrically controlled by device controller 120 into one of a plurality of polarization states by a control signal 206 from device controller 120 to generate an output polarized light beam 204. By way of example, polarizer 1103 may linearly or circularly polarize input light beam 202 to produce polarized light beam 204 having a circular or linear polarization state for illuminating driver 102. A portion of polarized light beam 204 is reflected or backscattered from the face of driver 102 and received at the image sensor of camera 106 as returned light 205.

In other embodiments, polarizer 1103 may be replaced with other electrically controllable polarizing devices such as Pockels cells, Kerr cells, Faraday rotators and variable wave plates.

The polarizing system also includes a polarizing filter 208 that is disposed at or adjacent camera 106 in the camera's field of view to filter returned light 205 from driver 102 and received at camera 106 for incidence onto the camera's image sensor. In some embodiments, the polarizing filter 208 is constructed in a conventional manner using a quarter wave plate and a linear polarizer in combination.

Polarizing filter 208 is preferably electrically controllable into different polarization states by a control signal 212 from device controller 120 to pass light of a certain polarization state to the camera's image sensor and to partially or entirely reject light having all other polarization states. By way of example, polarizing filter 208 may also be formed of or include a liquid crystal cell with a liquid crystal matrix controllable into different states to polarize the returned light 205 from driver 102.

In some embodiments, a single polarizing element may perform both the polarizing of polarizer 1103 and polarizing filter 208 by situating the single element in the path of beam 202 and the returned light 205. By way of example, a liquid crystal device having two spatially separated regions may be situated such that a first region of the liquid crystal device receives input light beam 202 and a second region of the liquid crystal device receives the returned light 205 from driver 102. The two regions of the liquid crystal device are independently electrically controllable such that the first region acts to polarize input light beam 202 and the second region acts as a polarizing filter.

In some embodiments, polarizer 1103 and/or polarizing filter 208 include or are replaced with a dielectric metasurface having sub-wavelength surface elements configured to impose predetermined phase, polarization and/or intensity changes to input light beam 202. Such an arrangement is described in WO 2019/119025 mentioned above. In these embodiments, control signal 206 may be configured to electromechanically move the dielectric metasurfaces into or out of the optical path. Polarizing filter 208 may include a dielectric metasurface having a two dimensional array of surface elements configured to pass a first circular polarized light component and absorb the remaining reflected light.

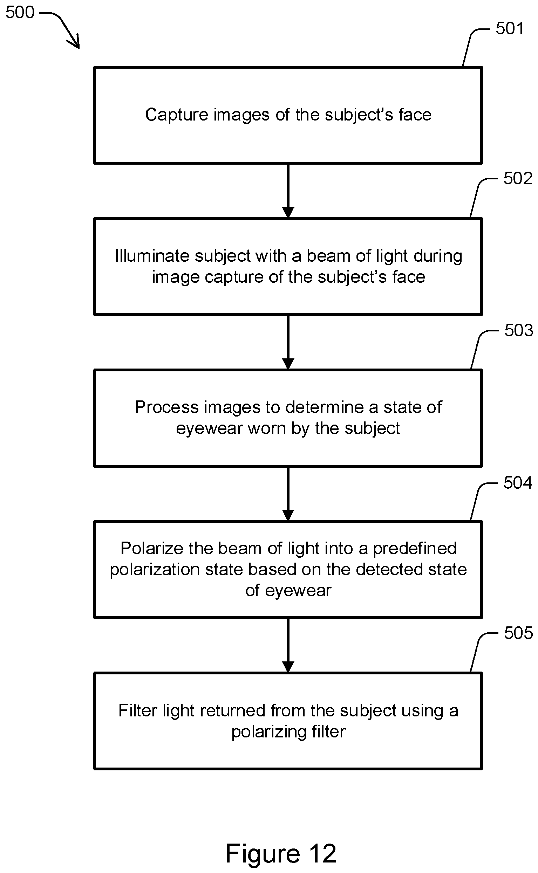

Referring to Figure 12, the above described system 1100 can be used to perform an eye tracking method 500 based on polarization control of input light beam 202 using polarizer 1103 (or other polarizing element) and polarizing filter 208 to improve the robustness of the eye tracking. In this application, as the subject monitoring is preferably performed in the infrared range, polarizer 1103 and polarizing filter 208 are configured to polarize light at least in the infrared region of the electromagnetic spectrum. In particular, the liquid crystal cell includes liquid crystals that have characteristics such that wavelengths in the infrared region experience birefringence and, as such, can facilitate polarization of infrared wavelengths.

At step 501, camera 106 is configured to capture a time sequence of digital images of driver 102. As mentioned above, during image capture, parameters of camera 106 such as frame rate, exposure period and sensor integration time/gain are controlled by device controller 120.

At step 502, during the periods of image capture by camera 106, light source 108 is controlled to emit input light beam 202 to selectively illuminate driver 102 including one or both of the driver's eyes. In a conventional driver monitoring system, light source 108 and camera 106 are typically located about 80 cm to 1 m from the face of driver 102. As such, the input light beam 202 emitted from light source should be sufficiently divergent so as to expand to an area at least as large as a human face at a distance of 80 cm. This may be achieved by light source 108 having an integrated divergent lens or other equivalent optics. Similarly, camera 106 may include appropriate optics such that the field of view of camera 106 sufficiently covers a human face at a distance of 80 cm.

Although illustrated in sequence in Figure 12, it will be appreciated that steps 501 and 502 occur simultaneously with the control of light source 108 synchronised with the exposure periods of camera 106.

At step 503, vision processor 118 processes at least a subset of the captured digital images to determine a state of eyewear worn by the subject. The detected state of eyewear includes, but is not limited to, 'no eyewear', 'unpolarized eyewear', 'polarized eyewear' and 'occluding eyewear'. In this regard, vision processor 118 is able to at least detect a presence or absence of eyewear and a presence of polarized or un-polarized eyewear worn by driver 102.

At step 503 or a related processing step, vision processor 118 also processes the captured images to determine one or more eye characteristics of driver 102. These characteristics may include pupils, irises eyelids, corneal specular reflections, eyelid contours, pupil size or pupil/iris contrast.

Prior to performing step 503, vision processor 118 may also process the captured images (or a subset thereof) to determine one or both eye regions of driver 102 in the images. This may include designating a square, rectangular or other shaped region of pixels around the detected eyes that represent a subset of the total pixels of the image. Processing only these eye regions may reduce the overall computational workload of vision processor 118. Determination of eye regions may occur by detecting pupil, iris, eyelid or other eye characteristics in a prior image and estimating a likely eye region for subsequent images based on measured or estimated head pose or eye movement.

The determination of eyewear state at step 503 may occur by vision processor 118 detecting the presence of specular reflections in a region of images adjacent to but not directly over the driver's eyes. If specular reflections are detected in a region adjacent the eyes, vision processor 118 may determine that driver 102 is wearing glasses and light from light source 108 is reflecting off the surface of the glasses. Specular reflections located directly over the eyes may represent specular reflections from the corneas and thus may not be indicative that eyewear is being worn.

The determination of eyewear at step 503 may also include performing object detection to detect the shape of spectacles or sunglasses on driver 102. This may include performing one or more of edge, contour or contrast detection on or around the driver's eyes. Dark or blocking sunglasses may be detected by a brightness measure on or around the eyes. If a sufficiently dark region of pixels is detected, together with or separate to shape recognition of eyewear, then vision processor 118 may determine that blocking glasses are being worn.

The determination of polarized eyewear or unpolarized eyewear state may be determined based on a current state of polarizer 1103 and/or polarizing filter 208 and an amount of light detected in an eye region of images.

Based on the detected state of eyewear and/or the detection of eye characteristics at step 503, at step 504, device controller 120 generates a control signal 206 to control polarizer 1103 into one of a plurality of different polarization states. By way of example, referring to Figure 11, the polarizer 1103 may generate polarized light beam 204 from input light beam 202 that has a polarization state that is one of an unpolarized (or randomly polarized) state, a linear polarization state, a circular polarization state or an elliptical polarization state.

Referring now to Figures 11 and 12, at step 505, in conjunction with step 504, device controller 120 generates control signal 212 to polarizing filter 208 to filter light received at camera 106 for incidence onto the camera's image sensor. In particular, polarizing filter 208 allows light in a first polarization state to pass and partially or completely filters light in other polarization states. By way of example, the polarization states of polarizing filter 208 may include an unpolarized (or randomly polarized) state, a linear polarization state, a circular polarization state or an elliptical polarization state.

The particular polarization state in which polarizer 1103 and polarizing filter 208 are configured by device controller 120 is dependent on the state of eyewear detected in step 503 and/or the detection of eye characteristics. By way of example, upon detection of a no eyewear state or polarized eyewear state by vision processor 118 in step 503, device controller 120 controls polarizer 1103 and polarizing filter 208 into an unpolarized (or random polarized) state to allow all polarization states to pass. Conversely, upon detection of a non-polarized eyewear state by vision processor 118 in step 503, device controller 120 controls polarizer 1103 into a linear or circular polarized state to produce linearly or left or right circularly polarized light beam 204. In some embodiments, the unpolarized state is achieved by deactivating polarizer 1103 or polarizing filter 208 or moving them out of the optical path.

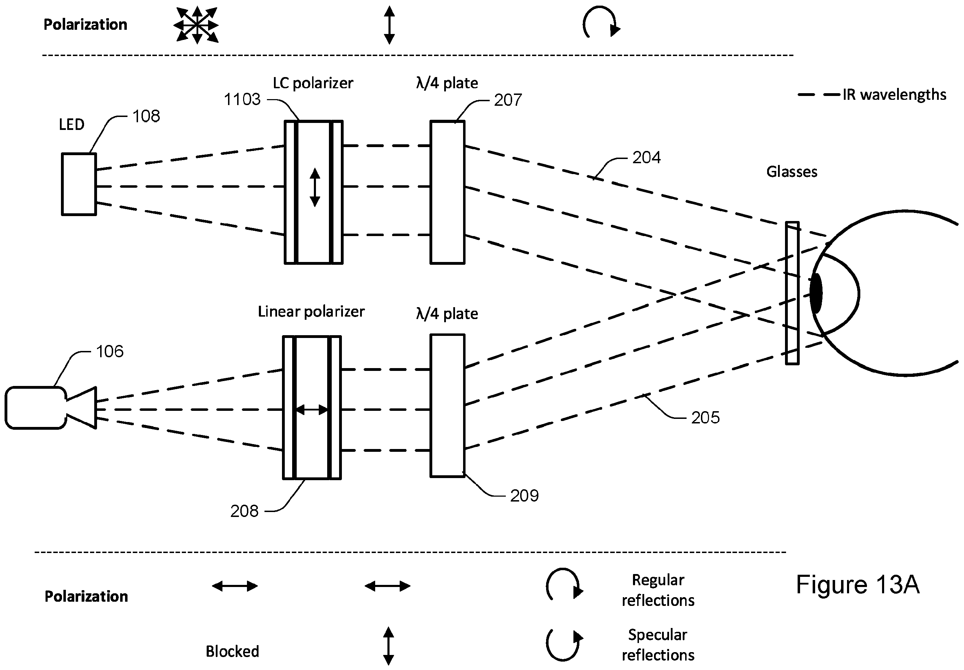

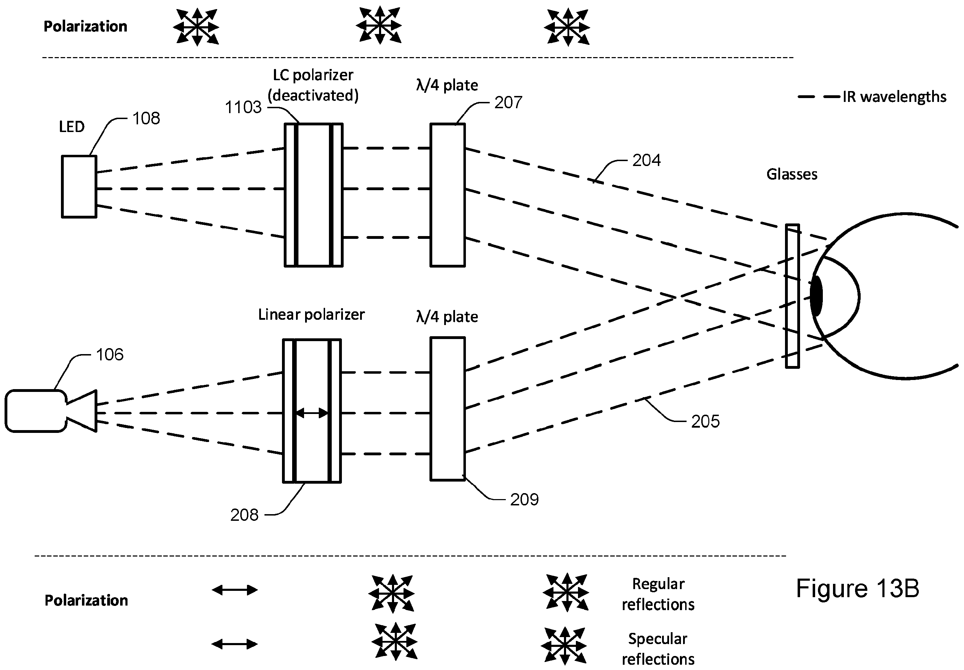

This selective polarization control of input light beam 202 will now be described with reference to Figures 13 to 16.

In some embodiments, polarizer 1103 is controlled in a similar manner to that of the metasurface in WO 2019/119025 to switch between an unpolarized state and a left hand or right hand circularly polarized state. Similarly, polarizing filter 208 is controlled between a respective unpolarized filter state when polarizer 1103 is in an unpolarized state and a left or right handed circular polarization state when polarizer 1103 is in a left or right handed circular polarization state.

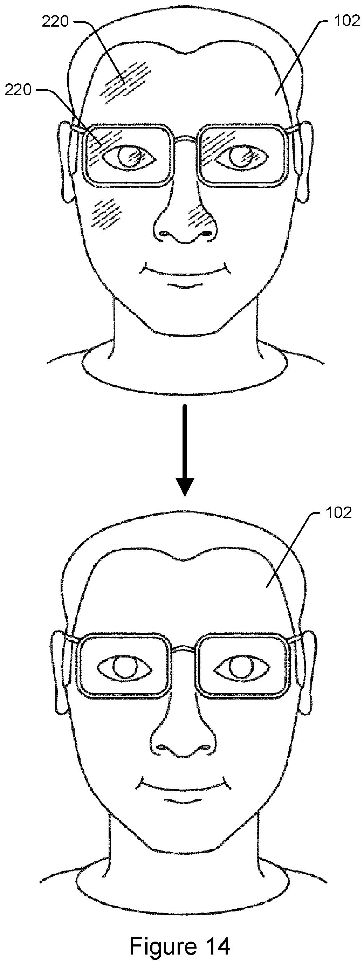

The scenario of polarizer 1103 polarizing input light beam 202 into a right hand circular polarized state is illustrated schematically in Figure 13A. In this embodiment, a separate quarter wave plate 207 is used to impart a relative phase change between orthogonal electric field components to convert the linearly polarized light from polarizer 1103 to right hand circular polarization. However, in other embodiments, polarizer 1103 may incorporate a quarter wave plate into a single unit. When polarizer 1103 is controlled to output linear polarization, light passed through quarter wave plate 207 is converted into a right hand circular polarization state. The right hand circular polarized light of beam 204 is projected onto the face of driver 102. The returned light 205 from the driver to camera 106 comprises specular and diffuse (or backscattered) reflections depending on the surface from which the light is reflected. It is known that specular reflections off highly reflective surfaces such as corneas, shiny skin and glasses produce glare in the presence of bright light conditions (including reflections of the light source 108 itself). This glare 220 is illustrated in the top panel of Figure 14, which illustrates an image of driver 102 who is wearing glasses. These reflections often represent noise in systems such as driver monitoring systems as light from outside the scene can be received at the image sensor.

Upon specular reflection from a surface at normal incidence, electromagnetic waves reverse their electric fields. For linearly polarized light, this results in a reversal of the linear polarity. For circular polarized light, the handedness of the polarization is reversed upon reflection. Thus, a right handed circular polarized light beam is reflected as left hand circular polarized light and vice versa. This is illustrated in the lower polarization panel of Figure 13A and 13B. Light reflected more diffusely off surfaces such as the driver's skin are reflected without any great change in the polarization state. Thus, diffusely reflected right hand circularly polarized light will be reflected in the same right hand circular polarized state.

The returned light 205 therefore comprises light of various polarization states. When polarizing filter 208 is configured to pass horizontally linear polarized light (either actively or in a passive state), passing light through a second quarter wave plate 209 converts the circularly polarized light back to linear polarization and then polarizing filter 208 will block the light resulting from specular reflections (such as from glasses) and pass the light resulting from regular reflections off subject 102. Although illustrated as a separate element, quarter wave plate 209 may be incorporated together with polarizing filter 208 as a single unit.

The received light from regular reflections is received at the image sensor of camera 106 to image the subject 102 with reduced glare effects from specular reflections. This transmission and receiving of circular polarized light thus advantageously allows for the filtering of noisy specular reflections from glare, thereby improving the quality of the image to be processed by processor 118. This glare reduction is illustrated in Figure 14.

Referring now to Figure 13B, when polarizer 1103 is deactivated (or configured into a non-polarizing state), subject 102 is illuminated by randomly polarized light and quarter wave plates 207 and 209 perform no polarizing functions. As such, randomly polarized light is incident onto polarizing filter 208 which outputs specular and regular reflections in a linear polarization to be imaged by camera 106.

Although described and illustrated as transmitting and receiving right hand circular polarized light, it will be appreciated that an equivalent setup can be created to transmit and receive left hand circular polarized light to achieve the same glare reduction effects. Similarly, although the polarizer 1103 and polarizing filter 208 are illustrated as a transmissive elements, it will be appreciated that, in other embodiments, polarizer 1103 and filter 208 can be realized as reflective elements. In some embodiments, polarizer 1103 and polarizing filter 208 may be incorporated into a single unit. Similarly, quarter wave plates 207 and 209 may be incorporated in to a single unit or may be replaced with other polarization rotation elements such as one or more Faraday rotators.

Although the above described polarization control acts to reduce glare effects from specular reflections such as eyewear, if the driver 102 is wearing polarized sunglasses, then insufficient light may be passed to the image sensor of camera 106 to perform eye tracking and driver monitoring. Further, even if the driver 102 is not wearing polarized sunglasses, polarizing light requires filtering a substantial amount of the initial light that is received from the face of driver 102 which reduces the overall light that reaches the image sensor of camera 106. As such, either camera 106 images a lower level of light or the power of light source 108 has to be increased to compensate for this. The present inventor has identified that it is advantageous to disable the polarization when eyewear is not present so as to improve the eye tracking and/or power consumption of driver monitoring system 1100.

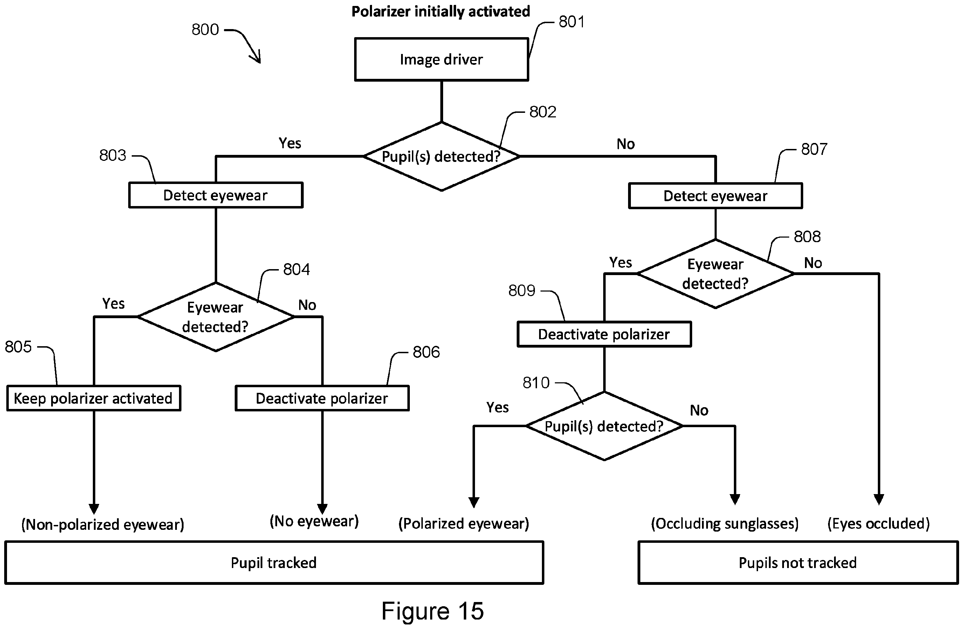

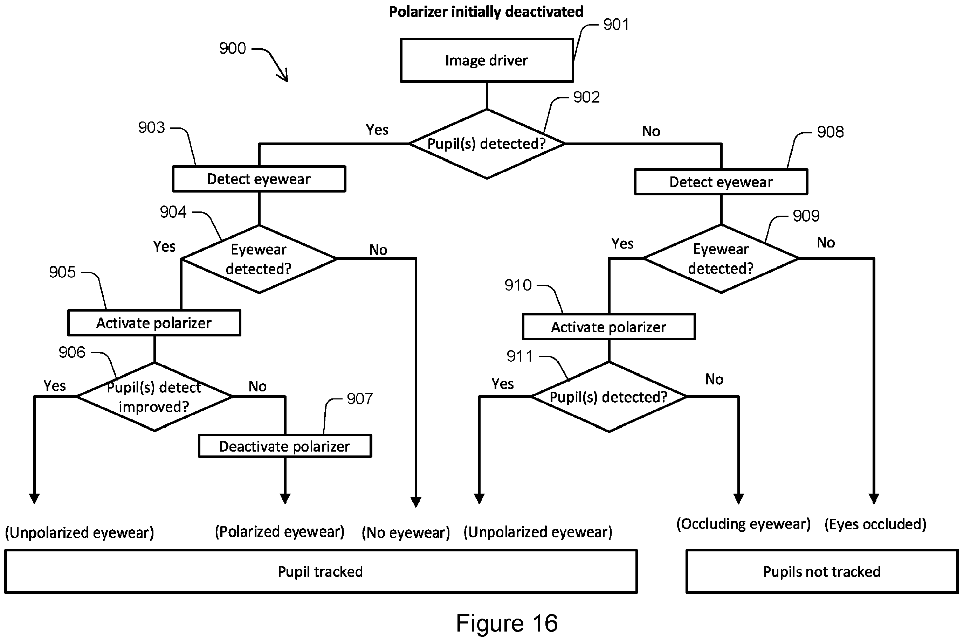

This can be achieved by controlling polarizer 1103 and polarizer 208 based on the detection of a state of eyewear by vision processor 118 to switch between a polarizing state, as shown in Figure 13A, and a non-polarizing state, as shown in Figure 13B. This dynamic polarization control will be described with reference to Figures 15 and 16.

Referring initially to Figure 15, there is illustrated a process flow diagram showing the primary process steps in a scenario where polarizer 1103 and polarizing filter 208 are initially controlled into an active state to polarize beam 204 into a polarized state such as a right hand circular polarized state.

At step 801, system 100 images the driver 102 using camera 106 under illumination from light source 108. Polarizer 1103 is initially activated to polarize light from light source 108 into a circular polarized state (left or right handed) and polarizing filter 208 is similarly controlled to polarize light in the same polarization state (left or right handed circular). At step 802, vision processor 118 processes the captured images to detect pupils of the driver 102 as example eye characteristics. The detection of pupils at step 802 may be simply a binary yes/no decision or a higher degree analysis. In some embodiments, one or both pupils must be detected with a certain degree of certainty or confidence. This may be performed by identifying a pupil/iris boundary or contrast. Vision processor 118 could similarly be configured to detect other eye characteristics such as irises, eyelids or pupil/iris contrast at step 802.

If, at step 802, vision processor 118 detects one or both pupils of driver 102, at step 803, vision processor 118 performs an eyewear detection routine to detect the presence of eyewear on driver 102. At step 804, if eyewear is detected, then vision processor 118 determines that the eyewear is unpolarized eyewear on the basis that sufficient circularly polarized light has passed through the eyewear to detect the pupils. This generates an eyewear state of "unpolarized eyewear". Conversely, if eyewear is not detected, then vision processor 118 determines an eyewear state of "no eyewear". This determination of eyewear state is stored in memory 116 and accessed in subsequent image processing by vision processor 118. Further, this determined eyewear state is used to generate control signals 206 and 212 for device controller 120 to control polarizer 1103 and polarizing filter 208.

If eyewear is detected at step 804, then, at step 805, the polarizer 1103 and polarizing filter 208 are controlled by device controller 120 to be maintained in an active state to continue to circularly polarize beam 204. In this state, system 1100 can monitor and track the pupils and other eye characteristics over a sequence of images to perform driver monitoring by system 1100 using circular polarized light. This allows unwanted glare that is reflected from the unpolarized eyewear to be filtered by polarizing filter 208 to improve the signal to noise ratio of system 100.

If eyewear is not detected at step 804, then, at step 806, control signals 206 and 212 are generated by device controller 120 to deactivate polarizer 1103 and polarizing filter 208 so that polarized beam 204 becomes unpolarized (or randomly polarized). Alternatively, polarizer 1103 and polarizing filter 208 may be switched to an active mode that does not perform polarization (or performs random polarization) or the devices are electromechanically moved out of the optical path. In this state, system 1100 can monitor and track the pupils and other eye characteristics without the need for polarized light. This increases the amount of light that is returned from the face of driver 102 to camera 106 and allows for more accurate eye tracking and/or allows the intensity of light source 108 to be selectively reduced.

If, at step 802, vision processor 118 was not able to detect one or both pupils, then, at step 807, vision processor 118 performs an eyewear detection routine to detect the presence of eyewear on driver 102. If, at step 808, eyewear is not detected, then vision processor 118 concludes that the eyes are occluded, such as by another object or the eyes are closed. In this case, vision processor 118 determines that the pupils cannot be identified from this image and processing moves to a subsequent image. Alternatively, in this case, more advanced image processing or device control may be performed in an attempt to recover one of both of the pupils. By way of example, the drive current and pulse time of light source 108 may be dynamically controlled in conjunction with the exposure period of camera 106 to improve the signal to noise ratio of the pupil detection. Such a technique is described in Published PCT Patent Application WO 2019/084595 to John Noble entitled "*System and Method for Improving Signal to Noise Ratio in Object Tracking Under Poor Light Conditions*" and assigned to Seeing Machines Limited.

If, at step 808, eyewear is detected, then, at step 809, device controller 120 generates control signals 206 and 212 to deactivate polarizer 1103 and polarizing filter 208 into an unpolarized or randomly polarized state. At step 810, vision processor 118 processes the newly captured images with the polarizing system deactivated to detect pupils of the driver 102 as example eye characteristics. If, at step 810, one or both pupils are sufficiently detected to perform eye tracking, then vision processor 118 determines an eyewear state of "polarized eyewear" and system 1100 performs eye tracking of driver 102 through polarized eyewear.

In some embodiments, upon detection of a polarized eyewear state, polarizer 1103 and polarizing filter 208 may be controlled into a vertical linear polarized state to improve the signal to noise ratio of the pupil detection. Polarized eyewear are typically polarized vertically linearly so as to block horizontally polarized light reflected from surfaces such as water. As such, polarizing light beam 204 into a vertical linear state improves the amount of light that will pass through the polarized sunglasses to reach the pupils while substantially reducing or blocking light polarized at other orientations.

If, at step 810, one or both pupils are still not detected, then vision processor 118 determines a state of "occluding eyewear" is reached such as when the driver 102 is wearing dark sunglasses. In this case, vision processor 118 may determine that the pupils cannot be tracked and processing continues with subsequent images. Alternatively, more advanced image processing or device control may be performed in an attempt to recover one of both of the pupils. By way of example, the drive current and pulse time of light source 108 may be dynamically controlled in conjunction with the exposure period of camera 106 in a manner similar to that described in WO 2019/084595.

Referring now to Figure 16, an alternate control method 900 is illustrated for the scenario where polarizer 1103 and polarizing filter 208 are initially deactivated. At step 901 system 1100 images the driver 102 using camera 106 under illumination from light source 108. With polarizer 1103 in an inactive state, light beam 204 is unpolarized or randomly polarized. At step 902, vision processor 118 processes the captured images to detect pupils of the driver 102 as example eye characteristics. If, at step 902, pupils are detected, then, at step 903, vision processor 118 performs an eyewear detection routine to detect the presence of eyewear. Alternatively, if pupils are detected at step 902, system 100 may simply perform eye tracking based on the detected pupil(s) without detecting eyewear (see Figure 17 below). However, the detection of eyewear allows for possibly improving the robustness of the eye tracking system when eyewear is present, as described below.

If, at step 904, eyewear are detected, then, at step 905, the polarizing system is activated by activating polarizer 1103 and polarizing filter 208. The polarizing system may be activated into a circularly polarized state so as to reduce glare from reflections off the eyewear as described above. At step 906, vision processor 118 again processes captured images to detect the presence of pupil(s) and compare with the pupil detection at step 902 to determine if the visibility of the detected pupil(s) has improved. This improvement may be an increase in the brightness of the pupil (or darkness of the pupil if the system is operating in a dark pupil mode) or an increase in the pupil/iris contrast.

If, at step 906, vision processor 118 determines that the pupil visibility has improved after polarization of light beam 204, then, vision processor 118 determines that driver 102 is wearing unpolarized eyewear and an eyewear state of unpolarized eyewear is specified. In this case, system 100 performs eye tracking of driver 102 using polarized light to reduce the glare from reflections off the unpolarized eyewear.

If, at step 906, vision processor 118 determines that the pupil visibility has decreased after polarization of light beam 204, then vision processor 118 determines that driver 102 is wearing polarized eyewear and an eyewear state of "polarized eyewear" is specified. In this circumstance, at step 907, device controller 120 deactivates polarizer 1103 and polarizing filter 208 so that system 100 performs eye tracking on driver102 with unpolarized or randomly polarized light.

At step 904, if eyewear is not detected, vision processor 118 determines that driver 102 is not wearing eyewear and an eyewear state of "no eyewear" is specified. In this scenario, the polarizing system remains inactive and system 1100 performs eye tracking on driver 102 with unpolarized or randomly polarized light.

At step 902, if pupil(s) are not detected, then, at step 908, vision processor 118 performs an eyewear detection to detect the presence of eyewear on driver 102. At step 909, if eyewear is detected, at step 910, device controller 120 activates polarizer 1103 and polarizing filter 208 into respective polarized states such as circularly polarized states. At step 911, vision processor 118 performs image processing on the images captured under illumination of polarized light to again detect the presence of one or both pupils of driver 102. If, at step 911, pupils are detected, then vision processor 118 determines that driver 102 is wearing unpolarized eyewear and a state of "unpolarized eyewear" is specified. In this circumstance, system 100 performs eye tracking by illuminating driver 102 with polarized light.

If, at step 911, pupils are not detected, then vision processor 118 determines that driver 102 is wearing occluding eyewear and an eyewear state of "occluding eyewear" is specified. In this circumstance, the pupils cannot be normally identified and vision processor 118 may simply continue processing subsequent images. However, in some embodiments, more advanced image processing or device control may be performed in an attempt to recover one of both of the pupils. By way of example, the drive current and pulse time of light source 108 may be dynamically controlled in conjunction with the exposure period of camera 106 in a manner similar to that described in WO 2019/084595.

If, at step 909, vision processor 118 detects that no eyewear is present then vision processor determines that the driver's pupil(s) are occluded and an eyewear state of "eyes occluded" is specified. In this circumstance, the pupils cannot be normally identified and vision processor 118 may simply continue processing subsequent images and await the eyes to be visible again. However, in some embodiments, more advanced image processing or device control may be performed in an attempt to recover one of both of the pupils. By way of example, the drive current and pulse time of light source 108 may be dynamically controlled in conjunction with the exposure period of camera 106 in a manner similar to that described in WO 2019/084595.

In some embodiments, a simpler algorithm may be implemented in which no active detection of an eyewear state is performed. An example simple algorithm is illustrated in Figure 17, which illustrates a scenario in which polarizer 1103 is initially deactivated. At initial step 1001, system 100 images the driver 102 using camera 106 under illumination from light source 108. With polarizer 1103 in an inactive state, light beam 204 is unpolarized or randomly polarized. At step 1002, vision processor 118 processes the captured images to detect pupils of the driver 102 as example eye characteristics. If, at step 1002, pupils are detected, then system 1100 performs eye tracking on driver 102 with unpolarized or randomly polarized light.

If, at step 1002, pupils are not detected, then, at step 1003, device controller 120 activates polarizer 1103 and polarizing filter 208 into respective polarized states such as circularly polarized states. At step 1004, vision processor 118 performs image processing on the images captured under illumination of polarized light to again detect the presence of one or both pupils of driver 102. If, at step 1004, one or both pupils are detected, then system 100 performs eye tracking by illuminating driver 102 with polarized light. If, at step 1004, neither pupil can be detected, then the pupils cannot be normally identified by system 1100 and vision processor 118 may simply continue processing subsequent images. However, in some embodiments, more advanced image processing or device control may be performed in an attempt to recover one of both of the pupils. By way of example, the drive current and pulse time of light source 108 may be dynamically controlled in conjunction with the exposure period of camera 106 in a manner similar to that described in WO 2019/084595.

### Eyewear mitigation and visible light shutter

The embodiments described above are able to perform dynamic polarization of infrared light to mitigate eyewear effects in eye tracking in conjunction with selectively passing or blocking visible light for conventional imaging of a subject. As the polarizing effects of the polarizers operate only on the infrared wavelengths and the visible light shutter operates only on the visible wavelengths, the two operations can be performed in conjunction with each other.

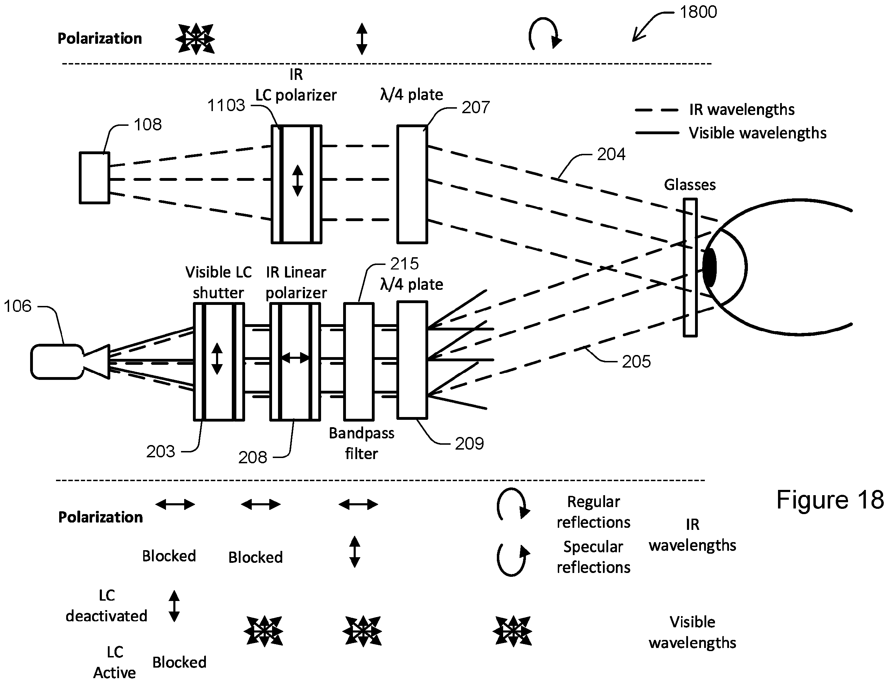

Referring now to Figure 18, there is illustrated a system 1800 for performing both dynamic infrared polarization for eye tracking and visible light control for conventional imaging. In system 1800, elements common to the systems described above are designated with the same reference numerals for simplicity. Light source 108 is configured to illuminate a subject 102 including their eyes with infrared light. Camera 106 incorporates an RGB-IR sensor to detect light in both the infrared and visible wavelength ranges. In Figure 18, infrared light is illustrated as a dashed line while visible light is designated as a solid line.

In system 1800, polarizer 1103 is preferably in the form of a liquid crystal polarizing filter that operates in the infrared wavelength range only. Considering infrared wavelengths first, polarizer 1103 hence operates as described above in relation to eyewear effect mitigation to selectively pass infrared light from light source 108 in either a linearly polarized state (vertical polarization is illustrated in Figure 18 as an example) or a randomly polarized state. The infrared light is then passed through quarter wave plate 207, which generates circular polarized light when polarizer 1103 is configured to generate linear polarized light or randomly polarized light otherwise. Note that only the infrared polarization states for when polarizer 1103 is in a polarizing mode are illustrated in Figure 18. Upon reflection from the subject 102, specular reflections are flipped from right hand polarization to left hand polarization (or vice versa in other configurations) while regular reflections remain right hand circularly polarized.

These circularly polarized components of returned light 205 are passed through second quarter wave plate 209, which convert them to linearly polarized light. In the illustrated embodiment, specular reflected components are converted to vertical polarization while regular reflected components are converted to horizontal polarization. These components are then passed through infrared linear polarizer 208A which has horizontal polarizing axis and filters specular reflected components while passing regular reflected components.

Considering now the visible wavelength range, visible light from the scene and surroundings are incident onto subject 102 and some visible light is coupled to camera 106. As the incident visible light is generally randomly polarized, quarter wave plate 209 has no major polarizing effects on the visible light. The light is passed through bandpass filter 215 and through IR linear polarizer 208, which does not impact the visible light. Electrically controllable filter 203 operates as a visible light shutter and selectively passes or blocks the visible light depending on the state of filter 203.

Where filter 203 includes an active domain liquid crystal shutter, the randomly polarized light passing through filter 203 may be switched on or off by electrically controlling domains within the liquid crystal material. Where filter 203 is a polarizing filter, the randomly polarized light may be linearly polarized and passed or blocked by electrically controlling the polarization rotation occurring in a twisted nematic liquid crystal cell as described above. Filter 203 is largely invisible to infrared wavelengths.

System 1800 allows the visible and infrared wavelengths to be processed independently so as to perform both dynamic polarization of infrared light to mitigate eyewear effects in eye tracking or selectively pass or block visible light for conventional imaging of a subject.

It will be appreciated that the embodiment illustrated in Figure 18 is not the only way to implement this functionality. In some embodiments, other types of polarizer may be employed that are not based on liquid crystal cells. Quarter wave plates 207 and 209 may be replaced by other polarization manipulating elements such as one or more Faraday rotators, Kerr cells or Pockels cells. In some embodiments, a single directional polarization rotator may be used to perform the forward and reverse polarization rotation of quarter wave plates 207 and 209. In some embodiments, infrared polarizer 1103 and infrared polarizer 208 may be a single polarizer device that has separate polarizing regions to polarize the incident infrared light into one polarization and filter the returned infrared light in another polarization state. By way of example, this may include a liquid crystal device having two or more independently controllable pixels or regions.

### Conclusions

Embodiments of the present invention provide a visible light shutter to selectively block visible light while passing most or all infrared light. This is advantageous to provide a single system which can operate as both a conventional imaging system (in visible light and optionally infrared light also) and a subject monitoring system (in infrared light).

Further embodiments of the present invention provide for robust eye tracking of a subject under different eyewear conditions based on the detection of an eyewear state or detection or absence of pupils. When the subject is detected to be wearing unpolarized eyewear, the subject is illuminated with polarized light such as circularly polarized light to reduce specular reflections off the eyewear that can result in glare that occludes the subject's eyes. When the subject is detected to be wearing polarized sunglasses, the subject is illuminated with unpolarized or randomly polarized light to ensure the polarized sunglasses do not block the light from reaching the pupils. In some embodiments, where the subject is wearing polarized sunglasses, the subject may be illuminated with vertical linear polarized light which best penetrates polarized sunglasses to better image the subject's pupils.

The system described above improves the robustness of an eye tracking system under different operating conditions.

### Interpretation

The term "infrared" is used throughout the description and specification. Within the scope of this specification, infrared refers to the general infrared area of the electromagnetic spectrum which includes near infrared, infrared and far infrared frequencies or light waves.

The terms "visible light", "visible wavelengths" and the like used throughout the specification is intended to refer to wavelengths of electromagnetic radiation in the visible range. This typically includes wavelengths in the range of 350 nm to 750 nm.

Throughout this specification, use of the terms "unpolarized" and "randomly polarized" are intended to mean the same thing. Specifically, these terms are intended to relate to a state of light in which no specific geometric orientation of the light's electric field vectors are imposed. As a result, the light appears to be unpolarized but is actually a combination of many randomly polarized electric field vectors that change rapidly with time. Unpolarized or randomly polarized light is produced naturally from incoherent light sources such as LEDs.

Throughout this specification, use of the terms "element" or "module" are intended to mean either a single unitary component or a collection of components that combine to perform a specific function or purpose.

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "controller" or "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

Reference throughout this specification to "one embodiment", "some embodiments" or "an embodiment" means that a particular feature, structure or characteristic described in connection with the embodiment is included in at least one embodiment of the present disclosure. Thus, appearances of the phrases "in one embodiment", "in some embodiments" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of exemplary embodiments of the disclosure, various features of the disclosure are sometimes grouped together in a single embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed embodiment.

Furthermore, while some embodiments described herein include some but not other features included in other embodiments, combinations of features of different embodiments are meant to be within the scope of the disclosure, and form different embodiments, as would be understood by those skilled in the art. For example, in the following claims, any of the claimed embodiments can be used in any combination.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical, electrical or optical contact, or that two or more elements are not in direct contact with each other but yet still co-operate or interact with each other.

## Claims

1. An imaging system for imaging a scene, the system including:
a camera having an image sensor for capturing images of the scene in both the visible and infrared wavelength ranges;
at least one light source configured to emit a beam of light to selectively illuminate the scene with infrared radiation during image capture by the camera; and
an electrically controllable filter being configured to pass infrared wavelengths to the image sensor and selectively pass or filter visible light received at the image sensor based on a control signal.

2. The imaging system according to claim 1 wherein the electrically controllable filter includes an active domain liquid crystal shutter.

3. The imaging system according to claim 1, or 2, wherein the electrically controllable filter includes a polarizing filter to selectively control the polarization of the beam of light.

4. The imaging system according to claim 3 wherein the polarizing filter includes a liquid crystal cell, a first linear polarizer disposed on an input side of the liquid crystal cell and a second linear polarizer disposed on an output side of the liquid crystal cell, wherein the first and second linear polarizers have orthogonal polarization axes.

5. The imaging system according to claim 3 wherein the polarizing filter selectively polarizes visible light while allowing the infrared light to pass.

6. The imaging system according to any one of claims 1 to 5 including an infrared polarizing device that selectively polarizes infrared light while allowing visible light to pass.

7. The imaging system according to any one of claims 1 to 6 wherein the control signal is based at least in part on an operational mode of the system.

8. The imaging system according to claim 7 wherein the control signal is based at least in part on a preference for output colour images or infrared images.

9. The imaging system according to any one of claims 1 to 6 wherein the control signal is based at least in part on an assessment by an image processor of whether or not one or more subjects identified in the captured images are wearing eyewear.

10. The imaging system according to any one of claims 1 to 9 that is a subject imaging system configured to image one or more subjects in the scene.

11. The imaging system according to claim 10 that is an occupant monitoring system for imaging a driver or passenger of a vehicle.

12. An image sensor comprising:
a sensor array having a first plurality of pixels configured to sense the visible range of wavelengths and a second plurality of pixels configured to sense only infrared wavelengths; and
an electrically controllable filter attached to or integral with the sensor array and configured to pass infrared wavelengths to the sensor array and selectively pass or filter visible wavelengths received at the sensor array based on a control signal.

13. The image sensor according to claim 12 wherein the electrically controllable filter includes an active domain liquid crystal shutter.

14. The image sensor according to claim 12 or 13 wherein the electrically controllable filter includes a polarizing filter to selectively control the polarization of the beam of light.

15. The image sensor according to claim 14 wherein the polarizing filter includes a liquid crystal cell, a first linear polarizer disposed on an input side of the liquid crystal cell and a second linear polarizer disposed on an output side of the liquid crystal cell, wherein the first and second linear polarizers have orthogonal polarization axes.

16. The image sensor according to any one of claims 12 to 15 including an imaging lens and wherein the electrically controllable filter is located between the imaging lens and the sensor array.

17. The image sensor according to any one of claims 12 to 16 configured to be incorporated into a subject monitoring system for monitoring one or more subjects in a scene.

18. The image sensor according to claim 17 wherein the subject monitoring system is a vehicle occupant monitoring system configured to image a driver and/or passengers of a vehicle.
